# FASCICULE DE BREVET EUROPEEN

(11) **EP 1 104 391 B1**
(45) Date de publication et mention de la délivrance du brevet: **17.08.2005**
(21) Numéro de dépôt: 00949529.2
(22) Date de dépôt: 13.06.2000
(51) Int. Cl.: B64D 13/00, C01B 13/02, F24F 3/16

(54) **EQUIPEMENT DE PURIFICATION D'AIR, NOTAMMENT D'AIR DE CABINE DANS LES AERONEFS**
LUFTREINIGUNGS- AUSRÜSTUNG, INSBESONDERE FÜR DIE LUFT EINER FLUGZEUGKABINE
AIR PURIFYING EQUIPMENT IN PARTICULAR FOR AIRCRAFT PASSENGER COMPARTMENT

(30) Priorité: 14.06.1999 FR 9907488
(43) Date de publication de la demande: 06.06.2001
(73) Titulaire: Sofrance, 87800 Nexon (FR)
(72) Inventeur: BERNARD, Jean-Loup, F-87110 Solignac (FR); CONTINI, Pascal, F-87170 Isle (FR); MANTEL, Thierry, F-87170 Isle (FR)
(74) Mandataire: Le Forestier, Eric
(86) Numéro de dépôt international: PCT/FR2000/001626
(87) Numéro de publication internationale: WO 2000/076846

(56) Documents cités:
- GB-A- 2 317 688
- US-A- 5 368 816
- US-A- 5 791 982

## Description

La présente invention concerne d'une façon générale les dispositifs de traitement d'air, notamment de l'air de cabine des aéronefs.

La qualité de l'air de cabine des aéronefs est un problème qui fait intervenir de nombreux paramètres. Ainsi l'air doit respecter des taux de concentration maximaux admissibles d'une part en microparticules, d'autre part en micro-organismes, de manière à ce qu'il soit bien toléré par l'être humain.

Ensuite, pour une question principalement de confort, il est souhaitable que son taux d'humidité relative et sa teneur en molécules odorantes soient situés à des valeurs dites de confort.

Un équipement classique de traitement d'air de cabine comprend un dispositif pour mélanger de l'air recyclé à partir de la cabine avec de l'air neuf prélevé à l'extérieur de l'aéronef, cet air étant filtré avec un filtre particulaire conventionnel.

Le document US 5 791 982 décrit un équipement de contrôle de la qualité de l'air dans lequel un système de génération d'oxygène sépare l'azote de l'air ambiant en faisant passer l'air à travers un tamis moléculaire.

Cette approche classique pose plusieurs problèmes :
- en premier lieu, un filtre particulaire est très mal adapté à l'épuration d'air contenant différentes formes de micro-organismes ; ainsi l'air recyclé à partir de la cabine n'est épuré essentiellement que du point de vue particulaire, et se trouve réinjecté dans la cabine sans que les micro-organismes qui y étaient contenus ne soient substantiellement éliminés ; on assiste en outre à une prolifération sur le filtre des micro-organismes qu'il a réussi à arrêter, ceux-ci se nourrissant de différentes particules arrêtées par celui-ci ; l'on sait également qu'un tel filtre particulaire est inapte à arrêter les micro-organismes de type virus ; enfin il est à noter que les molécules odorantes (odeurs de cuisine, de kérosène, humaines, etc.) ne sont pas arrêtées par un tel filtre ;
- ensuite, il est nécessaire de remplacer ce filtre de façon extrêmement régulière ;
- en troisième lieu, le fait de prélever de l'air neuf à l'extérieur de l'aéronef (et en pratique de l'air déjà relativement chaud prélevé au niveau des moteurs de l'aéronef) se traduit directement par une baisse de puissance de ces moteurs ; à titre indicatif, le fait de renouveler l'air de cabine à hauteur de 25% se traduit typiquement par une perte de puissance des moteurs de l'ordre de 1% ; on comprend que ceci va précisément à l'encontre des tendances récentes à réaliser toute économie possible en termes de consommation des aéronefs ;
- enfin le fait de renouveler une proportion importante de l'air de cabine présente l'inconvénient de diffuser en cabine un air extrêmement sec ; en effet l'air prélevé à l'extérieur présente typiquement une humidité relative voisine de 5%, alors que le seuil de confort se situe à environ 40%.

Pour résoudre ce dernier problème, on sait adjoindre à l'équipement de traitement d'air de cabine un dispositif d'humidification, mais les autres problèmes ne sont pas résolus ; au contraire, l'apport d'eau dans l'air à traiter peut favoriser le développement de certains micro-organismes.

Une autre solution connue consiste à faire passer l'air prélevé dans la cabine en vue de recyclage sur du gel de silice ; l'air ainsi asséché est renvoyé dans les zones de doublage de l'aéronef, pour y réduire les phénomènes de condensation, tandis que l'eau récupérée est utiliser pour humidifier l'air neuf. Ceci pose également des problèmes de prolifération bactérienne, le gel de silice constituant un bon support pour une telle prolifération.

Enfin l'on sait adjoindre au dispositif de traitement d'air à filtre particulaire un filtre à charbon actif, qui permet de mieux arrêter les micro-organismes et les molécules odorantes ; ceci pose toutefois de nouveaux problèmes : en premier lieu, les pertes de charge dans le circuit de traitement d'air sont sensiblement accrues, d'où la nécessité d'utiliser des ventilateurs de circulation plus importants, avec un accroissement indésirable de la consommation d'énergie à bord de l'aéronef ; ensuite, l'efficacité d'un tel filtre à charbon actif est très limitée dans le temps, et il serait nécessaire de le changer pratiquement à chaque escale ; enfin de tels filtres à charbon sont réputés comme constituant un excellent milieu pour la prolifération bactérienne ; pour ces raisons, de tels filtres à charbons ne sont pratiquement pas utilisés.

La présente invention vise à pallier ces limitations de l'état de la technique, et à proposer un un équipement de traitement d'air de cabine
- qui soit efficace, en présentant en particulier une action rémanente,
- dont la consommation énergétique reste modérée,
- et enfin qui permette d'obtenir des taux d'humidité relative dans des gammes dites de confort, sans qu'il soit nécessaire de prévoir un humidificateur spécifique.

La présente invention propose un équipement de purification d'air conforme à la revendication 1.

Le document GB 2 317 688 concerne un dispositif d'humidification pour une vitrine réfrigérée comprenant des moyens pour injecter de l'ozone dans de l'air et des moyens pour mélanger l'air contenant l'ozone avec un brouillard d'eau.

Des aspects préférés, mais non limitatifs, de l'équipement selon la présente invention sont les suivants :
- l'équipement comprend en outre un filtre particulaire interposé sur le trajet de l'air à traiter.
- le filtre particulaire comprend des moyens d'adsorption.
- les moyens d'injection d'un brouillard d'eau chargée en oxygène naissant comprennent une source d'eau minéralisée et un activateur dans lequel l'eau minéralisée est mise en contact avec un catalyseur métallique de pureté appropriée.
- le catalyseur métallique est un métal noble, tel que l'argent.
- le catalyseur métallique est prévu sur un support à surface spécifique élevée.
- la source d'eau minéralisée comprend un réservoir d'eau peu ou non minéralisée et un réacteur de minéralisation.
- pour une utilisation dans un aéronef comportant au moins un moteur à compresseur associé, le réservoir d'eau est alimenté en condensats issus dudit compresseur.
- les moyens d'injection d'un brouillard d'eau chargée en oxygène naissant comprennent en outre une chambre de mélange recevant l'eau chargée en oxygène naissant issue de l'activateur et l'air à traiter.
- le filtre particulaire peut être prévu en aval ou en amont de la chambre de mélange.
- l'équipement comprend en outre des moyens pour mélanger l'air purifié avec de l'air neuf.

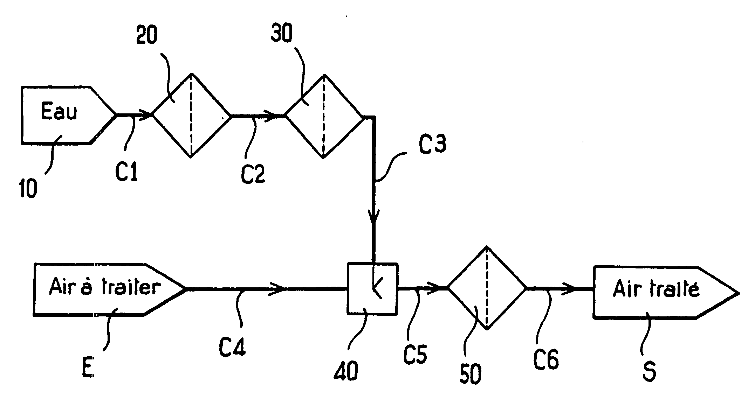

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel la figure unique est un schéma de principe d'un équipement de traitement d'air de cabine selon la présente invention.

Cette installation comprend un réservoir d'eau 10, qui contient de l'eau provenant avantageusement des condensats des compresseurs associés aux moteurs de l'aéronefs. Cette eau de condensation est en général pauvre en minéraux.

L'eau contenue dans ce réservoir est acheminée par une canalisation C1 à un réacteur 20 de minéralisation, qui est destiné à accroître la teneur de l'eau arrivante en minéraux. Ce réacteur peut être constitué par exemple par une cartouche possédant une arrivée d'eau à minéraliser et un départ d'eau minéralisée, et contenant un composé minéral sous forme oxydée, par exemple du carbonate de calcium.

L'équipement comprend en outre un activateur 30, dont une entrée est relié à la sortie du réacteur 20 par une canalisation C2. Cet activateur est constitué de préférence par une cartouche catalytique, telle qu'une cartouche plissée à base de tissus de carbone activé, sur lequel on a déposé une couche de catalyseur. Ce catalyseur est de préférence constitué par de l'argent métallique de pureté appropriée, ou autre métal noble.

Dans cet activateur, le sel minéral contenu dans l'eau réagit avec le catalyseur pour former de l'oxygène naissant, et en particulier des molécules de O₃, de O₂⁻, OH⁻, etc...

Pour davantage de détails quant à la manière de réaliser un tel activateur, on se référera à l'article « Carbon, Vol 36, Nos 1-2, pp. 61-65,1998. »

La sortie de l'activateur 30 est reliée par une canalisation C3 à une première entrée d'une chambre de mélange 40. Une autre entrée de cette chambre 40 reçoit par une canalisation C4 l'air à traiter prélevé dans la cabine de l'aéronef.

Cette chambre de mélange, opérant par exemple selon le principe du mélangeur à Venturi, a pour fonction de former dans l'air à traiter un brouillard d'eau contenant de l'oxygène naissant, telle qu'elle est engendrée en sortie de l'activateur 30.

Cette oxygène naissant, à fort pouvoir oxydant, est donc réparti de façon généralement uniforme dans l'air repris en cabine, et l'on assiste alors, progressivement dans le temps, à une oxydation des composés organiques (odeurs, micro-organismes, ...) présents dans cet air repris, pour ainsi détruire ces composés.

La sortie de la chambre de mélange est reliée par un conduit C5 à l'entrée d'un filtre particulaire 50 de type classique. Optionnellement, ce filtre peut également posséder une fonction d'adsorption, par exemple en incorporant des tissus de carbone activé.

A la sortie du filtre 50, l'air est renvoyé dans la cabine par une canalisation C6.

On comprend que grâce à un tel équipement, on introduit dans l'air à recycler un brouillard d'eau contenant de l'oxygène naissant dont l'action va pouvoir se faire progressivement, et donc avec une excellente efficacité.

En particulier, des premières réactions d'oxydation des composés à détruire vont avoir lieu dès la formation du mélange, mais également dans les canalisations C5 et C6, pour se poursuivre enfin dans la cabine. Il s'agit donc d'une action rémanente particulièrement efficace.

En outre, l'oxygène naissant présent dans le mélange arrivant sur le filtre 50 va pouvoir également détruire des composés qui se sont précédemment accumulés dans ce filtre, et donc éviter toute prolifération de micro-organismes à la surface du filtre.

On notera ici que la destruction des virus, bactéries et microbes contenus dans l'air à traiter ou dans le filtre 50 s'effectue sans libération d'endotoxines, ce qui est particulièrement avantageux.

On observera par ailleurs que, grâce à l'introduction d'eau dans l'air à traiter, on peut aisément maintenir le taux d'humidité de cet air à un niveau de confort.

Bien entendu, l'équipement comprend en outre tout dispositif nécessaire à la mise en circulation de l'air à traiter (ventilateur aspirant ou soufflant) et de l'eau en amont ou en aval du réacteur 20 ou de l'activateur 30 (pompe).

En outre, l'homme du métier saura apporter à la présente invention de nombreuses variantes ou modifications dans les limites fixées par les revendications jointes.

En particulier, la présente invention peut être mise en oeuvre conjointement avec un dispositif d'apport partiel d'air neuf. Dans ce cas, le mélange entre air neuf et air recyclé est réalisé de préférence en aval du filtre 50.

En outre, le catalyseur prévu dans l'activateur 30 peut être prévu sur tout support présentant la surface spécifique adéquate, tel que de la silice, de l'alumine, une argile ou une zéolithe.

L'invention trouve application non seulement dans le traitement d'air de cabine des aéronefs, mais plus généralement dans tout autre domaine, tel que celui des environnements propres pour l'industrie agro-alimentaire, le domaine hospitalier, le domaine du conditionnement d'air dans les bâtiments en tous genres, ...

## Revendications

1. Equipement de purification d'air, notamment de l'air de cabine d'un aéronef, **caractérisé en ce qu'**il comprend des moyens (10, 20, 30, 40) pour injecter dans l'air à purifier un brouillard d'eau chargée en oxygène naissant, les dits moyens comprenant
- des moyens de catalyse (30) pour former de l'oxygène naissant dans de l'eau,
- des moyens de mélange (40) pour former dans l'air à purifier un brouillard contenant l'eau chargée en oxygène naissant.

2. Equipement selon la revendication 1, **caractérisé en ce qu'**il comprend en outre un filtre particulaire (50) interposé sur le trajet de l'air à traiter.

3. Equipement selon la revendication 2, **caractérisé en ce que** le filtre particulaire (50) comprend des moyens d'adsorption.

4. Equipement selon l'une des revendications 1 à 3, **caractérisé en ce que** les moyens d'injection d'un brouillard d'eau chargée en oxygène naissant comprennent une source d'eau minéralisée (10, 20) et un activateur (30) dans lequel l'eau minéralisée est mise en contact avec un catalyseur métallique de pureté appropriée.

5. Equipement selon la revendication 4, **caractérisé en ce que** le catalyseur métallique est un métal noble, tel que l'argent.

6. Equipement selon la revendication 5, **caractérisé en ce que** le catalyseur métallique est prévu sur un support à surface spécifique élevée.

7. Equipement selon l'une des revendications 4 à 6, **caractérisé en ce que** la source d'eau minéralisée comprend un réservoir (10) d'eau peu ou non minéralisée et un réacteur de minéralisation (20).

8. Equipement selon l'une des revendications 4 à 7, **caractérisé en ce que** les moyens d'injection d'un brouillard d'eau chargée en oxygène naissant comprennent en outre une chambre de mélange (40) recevant l'eau chargée en oxygène naissant issue de l'activateur (30) et l'air à traiter.

9. Equipement selon l'une des revendications 2 et 3 prise en combinaison avec la revendication 7, **caractérisé en ce que** le filtre particulaire (50) est prévu en aval de la chambre de mélange.

10. Equipement selon l'une des revendications 2 et 3 prise en combinaison avec la revendication 7, **caractérisé en ce que** le filtre particulaire (50) est prévu en amont de la chambre de mélange.

11. Equipement selon l'une des revendications précédentes, **caractérisé en ce qu'**il comprend en outre des moyens pour mélanger l'air purifié avec de l'air neuf.

12. Aéronef comportant au moins un moteur à compresseur associé, **caractérisé en ce qu'**il comprend un équipement selon la revendication 7, le réservoir d'eau (10) étant alimenté en condensats issus dudit compresseur.

## Claims

1. Equipment for purifying air, in particular aircraft cabin air, the equipment being **characterized in that** it comprises means (10, 20, 30, 40) for injecting a spray of water laden with nascent oxygen into the air to be purified, said means comprising:
· catalyst means (30) for forming nascent oxygen in the water; and
· mixing means (40) for forming a spray containing the water laden with nascent oxygen in the air to be purified.

2. Equipment according to claim 1, **characterized in that** it further comprises a particle filter (50) interposed on the path of the air to be treated.

3. Equipment according to claim 2, **characterized in that** the particle filter (50) includes adsorption means.

4. Equipment according to any one of claims 1 to 3, **characterized in that** the means for injecting a spray of water laden with nascent oxygen comprise a source of mineralized water (10, 20) and an activator (30) in which the mineralized water is put into contact with a metallic catalyst of suitable purity.

5. Equipment according to claim 4, **characterized in that** the metallic catalyst is a precious metal such as silver.

6. Equipment according to claim 5, **characterized in that** the metallic catalyst is provided on a medium having large specific surface area.

7. Equipment according to any one of claims 4 to 6, **characterized in that** the source of mineralized water comprises a supply (10) of water that is mineralized little or not at all, and a mineralization reactor (20).

8. Equipment according to any one of claims 4 to 7, **characterized in that** the means for injecting a spray of water laden with nascent oxygen further comprise a mixing chamber (40) receiving both the air to be treated and the water laden in nascent oxygen from the activator (30).

9. Equipment according to claim 2 or 3, taken in combination with claim 7, **characterized in that** the particle filter (50) is located downstream from the mixing chamber.

10. Equipment according to claim 2 or 3, taken in combination with claim 7, **characterized in that** the particle filter (50) is located upstream from the mixing chamber.

11. Equipment according to any preceding claim, **characterized in that** it further comprises means for mixing the purified air with new air.

12. An aircraft having at least one engine with an associated compressor, said aircraft being **characterized in that** it includes equipment according to claim 7, the water supply (10) being fed from condensates coming from said compressor.

## Patentansprüche

1. Einrichtung zur Reinigung von Luft, insbesondere der Luft der Kabine eines Luftfahrzeugs, **dadurch gekennzeichnet, dass** sie Mittel (10, 20, 30, 40) umfasst, um in die zu reinigende Luft einen Nebel von mit naszierendem Sauerstoff beladenem Wasser zu injizieren, wobei die Mittel umfassen:
- Katalysemittel (30), um in Wasser naszierenden Sauerstoff zu bilden,
- Mischmittel (40), um in der zu reinigenden Luft einen Nebel, welcher das mit naszierendem Sauerstoff beladene Wasser enthält, zu bilden.

2. Einrichtung nach Anspruch 1, **dadurch gekennzeichnet, dass** sie außerdem einen Teilchenfilter (50), welcher in dem Weg der zu behandelnden Luft zwischengeschaltet ist, umfasst.

3. Einrichtung nach Anspruch 2, **dadurch gekennzeichnet, dass** der Teilchenfilter (50) Adsorptionsmittel umfasst.

4. Einrichtung nach einem der Ansprüche 1 bis 3, **dadurch gekennzeichnet, dass** die Mittel zur Injektion eines Nebels von mit naszierendem Sauerstoff beladenem Wasser eine Quelle von mineralisiertem Wasser (10, 20) und einen Aktivator (30), in welchem das mineralisierte Wasser mit einem metallischen Katalysator von geeigneter Reinheit in Kontakt gebracht wird, umfassen.

5. Einrichtung nach Anspruch 4, **dadurch gekennzeichnet, dass** der metallische Katalysator ein Edelmetall, wie Silber, ist.

6. Einrichtung nach Anspruch 5, **dadurch gekennzeichnet, dass** der metallische Katalysator auf einem Träger mit hoher spezifischer Oberfläche vorgesehen ist.

7. Einrichtung nach einem der Ansprüche 4 bis 6, **dadurch gekennzeichnet, dass** die Quelle von mineralisiertem Wasser ein Reservoir (10) von wenig oder nicht mineralisiertem Wasser und einen Mineralisierungsreaktor (20) umfasst.

8. Einrichtung nach einem der Ansprüche 4 bis 7, **dadurch gekennzeichnet, dass** die Mittel zur Injektion eines Nebels von mit naszierendem Sauerstoff beladenem Wasser außerdem eine Mischkammer (40) umfassen, welche das mit naszierendem Sauerstoff beladene Wasser, welches aus dem Aktivator (30) stammt, und die zu behandelnde Luft aufnimmt.

9. Einrichtung nach einem der Ansprüche 2 und 3 zusammen genommen mit Anspruch 7, **dadurch gekennzeichnet, dass** der Teilchenfilter (50) stromabwärts von der Mischkammer vorgesehen ist.

10. Einrichtung nach einem der Ansprüche 2 und 3 zusammen genommen mit Anspruch 7, **dadurch gekennzeichnet, dass** der Teilchenfilter (50) stromaufwärts von der Mischkammer vorgesehen ist.

11. Einrichtung nach einem der vorangegangenen Ansprüche, **dadurch gekennzeichnet, dass** sie außerdem Mittel, um die gereinigte Luft mit frischer Luft zu mischen, umfasst.

12. Luftfahrzeug, welches wenigstens einen Motor mit damit verbundenem Kompressor umfasst, **dadurch gekennzeichnet, dass** es eine Einrichtung nach Anspruch 7 umfasst, wobei das Wasserreservoir (10) mit aus dem Kompressor stammenden Kondensaten gespeist wird.
